# EUROPÄISCHE PATENTANMELDUNG

(11) **EP 3 622 812 A1**
(43) Veröffentlichungstag der Anmeldung: **18.03.2020**
(21) Anmeldenummer: 18194285.5
(22) Anmeldetag: 13.09.2018
(51) Int. Cl.: A01K 9/00

(54) **SYSTEM ZUR FÜTTERUNG VON NUTZTIEREN MIT EINER VOLLMILCHHALTIGEN TRÄNKE**

(71) Anmelder: Holm, Hans Joachim, 24784 Westerrönfeld (DE); Laue, Hans-Joachim, 24783 Osterrönfeld (DE)
(72) Erfinder: Holm, Hans Joachim, 24784 Westerrönfeld (DE); Laue, Hans-Joachim, 24783 Osterrönfeld (DE)
(74) Vertreter: Hauck Patentanwaltspartnerschaft mbB

(57) **Zusammenfassung**

System zur Fütterung von Nutztieren mit einer vollmilchhaltigen Tränke, wobei das System folgendes aufweist:
• ein Vollmilchdepot, das einen Vollmilchtank zur Aufnahme eines Vollmilchvorrats und eine Entnahmeleitung aufweist,
• eine Zubereitungseinheit zur Zubereitung einer Tränkeration, die eine Vollmilchzuführleitung, einen Tränkerationsbehälter und eine Abgabeleitung aufweist,
• eine Verbindungsleitung, die die Entnahmeleitung mit der Vollmilchzuführleitung verbindet,
• einen Saugnuckel, der mit der Abgabeleitung verbunden ist,
• eine Reinigungseinheit, die einen Reinigungsmittelbehälter zur Aufnahme eines Reinigungsmittels und eine Reinigungsmittelzuführeinrichtung, mit der dem Vollmilchtank Reinigungsmittel aus dem Reinigungsmittelbehälter zugeführt werden kann, und
• eine Steuerung, die dazu ausgebildet ist, die Reinigungseinheit und die Zubereitungseinheit zur Ausführung eines Reinigungsvorgangs derart anzusteuern, dass eine Reinigungsflüssigkeit aus dem Vollmilchtank durch die Verbindungsleitung in die Zubereitungseinheit geleitet wird.

## Beschreibung

Die Erfindung betrifft ein System zur Fütterung von Nutztieren mit einer vollmilchhaltigen Tränke. Zur Fütterung von Nutztieren, beispielsweise von Kälbern, Lämmern oder Ferkeln, werden Tränkeautomaten eingesetzt, die Tränkerationen einer temperierten Tränke zubereiten. Die Tränke kann aus Milchaustauschpulver (MAT) und Wasser angemischt werden. Ebenfalls möglich ist eine Fütterung mit Vollmilch oder einem Gemisch aus Vollmilch, Milchaustauschpulver und Wasser. Bei der Verwendung von vollmilchhaltiger Tränke spielt die Hygiene eine besonders große Rolle. Wird zur Bereitstellung der Vollmilch ein Vorratstank verwendet, muss dieser regelmäßig gereinigt werden. Dies gilt ebenso für alle anderen Elemente, die mit der Vollmilch in Berührung kommen, beispielsweise Leitungen und Ventile des Tränkeautomaten sowie Leitungen, die von dem Tränkeautomaten zu einer Abrufstation und/oder einem Saugnuckel führen.

Um die erforderlichen Reinigungsmaßnahmen zu vereinfachen, sind Tränkeautomaten bekannt geworden, die eine automatische Reinigung ausführen können. Hierzu werden die Elemente des Tränkeautomaten gegebenenfalls unter Zusatz von Reinigungsmittel gespült. Während einer solchen Reinigungsphase kann der Tränkeautomat keine Tränke zur Verfügung stellen und der Saugnuckel muss zum Beispiel durch Schließen eines Ventils von dem Tränkeautomaten getrennt werden.

Davon ausgehend ist es die Aufgabe der Erfindung, ein System zur Fütterung von Nutztieren mit einer vollmilchhaltigen Tränke zur Verfügung zu stellen, das einfacher gereinigt werden kann und das eine hohe Verfügbarkeit aufweist.

Diese Aufgabe wird gelöst durch das System mit den Merkmalen des Anspruchs 1. Vorteilhafte Ausgestaltungen sind in den Unteransprüchen angegeben. Das System dient zur Fütterung von Nutztieren mit einer vollmilchhaltigen Tränke und weist die folgenden Merkmale auf:
- ein Vollmilchdepot, das einen Vollmilchtank zur Aufnahme eines Vollmilchvorrats und eine Entnahmeleitung aufweist,
- eine Zubereitungseinheit zur Zubereitung einer Tränkeration, die eine Vollmilchzuführleitung, einen Tränkerationsbehälter und eine Abgabeleitung aufweist,
- eine Verbindungsleitung, die die Entnahmeleitung mit der Vollmilchzuführleitung verbindet,
- einen Saugnuckel, der mit der Abgabeleitung verbunden ist,
- eine Reinigungseinheit, die einen Reinigungsmittelbehälter zur Aufnahme eines Reinigungsmittels und eine Reinigungsmittelzuführeinrichtung, mit der dem Vollmilchtank Reinigungsmittel aus dem Reinigungsmittelbehälter zugeführt werden kann, und
- eine Steuerung, die dazu ausgebildet ist, die Reinigungseinheit und die Zubereitungseinheit zur Ausführung eines Reinigungsvorgangs derart anzusteuern, dass eine Reinigungsflüssigkeit aus dem Vollmilchtank durch die Verbindungsleitung in die Zubereitungseinheit geleitet wird.

Das Vollmilchdepot dient zur Aufbewahrung und Bereitstellung eines Vollmilchvorrats. Es weist hierzu einen Vollmilchtank mit einem Fassungsvermögen von beispielsweise mindestens 50 1, mindestens 100 1 oder 150 1 oder mehr auf. Über die Entnahmeleitung kann die Vollmilch aus dem Vollmilchtank entnommen werden. Der Vollmilchtank kann einen verschließbaren Deckel aufweisen, sodass er nach dem Entfernen des Deckels einfach befüllt werden kann.

Die Funktion der Zubereitungseinheit kann im Wesentlichen derjenigen eines Tränkeautomaten entsprechen. Sie bereitet jeweils eine Tränkeration zu, die einem Nutztier über den Saugnuckel zur Verfügung gestellt wird. Wie im Zusammenhang mit Tränkeautomaten bekannt, kann die Tränkeration individuell für ein bestimmtes Nutztiere zubereitet werden, zum Beispiel nach Identifizierung des Tiers mit einer Identifizierungseinrichtung. Möglich ist auch eine Zubereitung von Tränkerationen, die jeweils für mehrere Nutztiere bestimmt sind. Die Zubereitungseinheit kann einen Vorratsbehälter für Milchaustauschpulver und einen Wasseranschluss aufweisen, so dass in dem Tränkerationsbehälter vollmilchhaltige Tränken angemischt werden können, die zusätzlich Milchaustauschpulver und Wasser enthalten, oder dass eine vollmilchfreie Fütterung mit Milchaustauschpulver und Wasser möglich ist. Die Zubereitungseinheit kann eine mit dem Wasseranschluss verbundene Wasserleitung mit einem Absperrventil aufweisen, die in die Vollmilchzuführleitung mündet. Dann können gegebenenfalls Wasser und Vollmilch über dieselbe Leitung in den Tränkerationsbehälter eingefüllt werden.

Die Bereitstellung der Tränkeration erfolgt über die Abgabeleitung. Die in der Tränkeration verarbeitete Vollmilchkomponente wird der Zubereitungseinheit über die Vollmilchzuführleitung zugeführt. Die Vollmilchzuführleitung ist über eine Verbindungsleitung mit der Entnahmeleitung des Vollmilchdepots verbunden. Diese Verbindung kann je nach Ausgestaltung des Systems unterschiedlich ausgeführt sein. Beispielsweise können das Vollmilchdepot und die Zubereitungseinheit jeweils in einem eigenen Gehäuse angeordnet sein. In diesem Fall können freie Enden der Entnahmeleitung und der Vollmilchzuführleitung Kupplungen oder sonstige Verbindungseinrichtungen aufweisen, beispielsweise angeordnet und/oder befestigt an dem jeweiligen Gehäuse. Die Verbindungsleitung ist dann eine separate Leitung, deren Enden mit den jeweiligen Verbindungseinrichtungen verbunden werden. Es ist jedoch ebenso möglich, dass die Verbindungsleitung an einem ihrer Enden oder an ihren beiden Enden nahtlos in die Entnahmeleitung bzw. die Vollmilchzuführleitung übergeht. Diese Lösung bietet sich insbesondere an, wenn Vollmilchdepot und Zubereitungseinheit in einem gemeinsamen Gehäuse untergebracht sind.

Der Saugnuckel kann insbesondere in einer Abrufstation oder in einem Abrufstand angeordnet sein. Ebenfalls möglich ist eine Verbindung der Abgabeleitung mit mehreren Saugnuckeln und/oder Abrufstationen.

Das erfindungsgemäße System umfasst eine Reinigungseinheit, die insbesondere dem Vollmilchdepot zugeordnet und/oder in einem Gehäuse des Vollmilchdepots angeordnet sein kann. Sie weist mindestens einen Reinigungsmittelbehälter und eine Reinigungsmittelzuführeinrichtung auf, mit der dem Vollmilchtank Reinigungsmittel zugeführt werden kann. Mithilfe des Reinigungsmittels kann dadurch der Vollmilchtank gereinigt werden.

Bei der Erfindung gibt es außerdem eine Steuerung, mit der die Reinigungseinheit und die Zubereitungseinheit zur Ausführung eines Reinigungsvorgangs angesteuert werden, sodass eine Reinigungsflüssigkeit aus dem Vollmilchtank durch die Verbindungsleitung in die Zubereitungseinheit geleitet wird. Welche Elemente von Reinigungseinheit und Zubereitungseinheit dazu im Einzelnen von der Steuerung angesteuert werden, hängt von der Ausgestaltung der genannten Einheiten ab. Insbesondere ist vorgesehen, dass die Steuerung die Reinigungsmittelzuführeinrichtung der Reinigungseinheit ansteuert, insbesondere so, dass eine definierte Menge von Reinigungsmittel in den Vollmilchtank eingegeben wird. Innerhalb der Zubereitungseinheit können insbesondere ein Ventil und/oder eine Fördereinrichtung angesteuert werden, die außerhalb des Reinigungsvorgangs, also wenn eine Tränkeration zubereitet werden soll, eine Vollmilchzufuhr aus der Vollmilchzuführleitung in den Tränkerationsbehälter ermöglichen. Der Tränkerationsbehälter kann auch als Anmischbehälter bezeichnet werden.

In der Entnahmeleitung kann ein Ablassventil angeordnet sein. Dieses kann ebenfalls von der Steuerung angesteuert werden, um den beschriebenen Reinigungsvorgang auszuführen. In diesem Fall steuert die Steuerung also auch Elemente des Vollmilchdepots an.

Die Erfindung weist gegenüber der aus dem Stand der Technik bekannten, auf einen Tränkeautomaten beschränkten automatischen Reinigung mehrere wichtige Vorteile auf. Erstens können sämtliche "stromaufwärts" der Abgabeleitung mit der Vollmilch in Berührung kommende Elemente automatisch gereinigt werden, einschließlich des Vollmilchtanks, der Entnahmeleitung, der Verbindungsleitung und der Vollmilchzuführleitung. Eine zusätzliche manuelle Reinigung dieser Elemente ist daher nicht erforderlich, was eine wesentliche Vereinfachung des Reinigungsvorgangs darstellt.

Zweitens werden durch den einheitlichen Reinigungsvorgang unvermeidliche, reinigungsbedingte Ausfallzeiten auf ein Minimum reduziert. Insbesondere kommt es nicht zu zusätzlichen Ausfallzeiten während einer gesonderten Reinigung des Vollmilchdepots und/oder der Verbindungsleitung. Es ist auch nicht erforderlich, diese Elemente für eine manuelle Reinigung voneinander zu trennen und nachfolgend wieder zu verbinden. Dadurch wird eine höhere Verfügbarkeit des Systems erzielt.

Drittens wird ein besonders sparsamer und umweltfreundlicher Reinigungsmitteleinsatz erreicht, weil die mit dem Reinigungsmittel bereits im Vollmilchtank hergestellte Reinigungsflüssigkeit nach der Reinigung des Vollmilchtanks nicht verworfen, sondern für die Reinigung der Verbindungsleitung und der Zubereitungseinheit weiterverwendet wird.

In einer Ausgestaltung ist der Saugnuckel über eine Saugleitung mit der Abgabeleitung verbunden, wobei von der Saugleitung an einem Abzweigpunkt eine Abzweigleitung abzweigt, in der eine Pumpe angeordnet ist, wobei die Steuerung dazu ausgebildet ist, die Zubereitungseinheit und die Pumpe so anzusteuern, dass die Reinigungsflüssigkeit bei dem Reinigungsvorgang von der Vollmilchzuführleitung durch den Tränkerationsbehälter, durch die Abgabeleitung, durch die Saugleitung bis zum Abzweigpunkt und dann durch die Abzweigleitung geleitet wird. Die Abzweigleitung kann ein offenes Ende aufweisen, das beispielsweise oberhalb eines Abflusses angeordnet sein kann. Der Abzweigpunkt kann nahe an dem Saugnuckel angeordnet sein, sodass die Saugleitung vollständig oder fast vollständig von der automatisierten Reinigung erfasst wird.

In einer Ausgestaltung ist in der Entnahmeleitung ein Füllstandsensor und/oder ein Leermelder angeordnet. Der Füllstandsensor bzw. der Leermelder ist mit der Steuerung verbunden, sodass die Steuerung dafür Sorge tragen kann, dass der Reinigungsvorgang nur bei leerem Vollmilchtank ausgeführt wird. Mithilfe der Füllstandsüberwachung kann außerdem die Menge an Reinigungsflüssigkeit in dem Vollmilchtank während eines Reinigungsvorgangs überwacht und/oder gesteuert werden.

In einer Ausgestaltung weist die Reinigungseinheit einen Wasseranschluss und eine Reinigungsleitung auf, die von dem Wasseranschluss bis zu dem Vollmilchtank führt, wobei die Reinigungsmittelzuführeinrichtung eine Pumpe aufweist, mit der Reinigungsmittel aus dem Reinigungsmittelbehälter in den Vollmilchtank und/oder in die Reinigungsleitung gepumpt werden kann. Die Pumpe ist mit der Steuerung verbunden und wird von der Steuerung angesteuert, um eine gewünschte Reinigungsmittelmenge in den Vollmilchtank einzugeben. Außerdem kann dem Wasseranschluss ein ebenfalls mit der Steuerung verbundenes Ventil zugeordnet sein, sodass die Steuerung auch die Wasserzufuhr in den Vollmilchtank steuern kann.

In einer Ausgestaltung ist die Reinigungsleitung mit einer Sprühdüse verbunden, die in dem Vollmilchtank angeordnet ist. Dadurch können Boden, Wände und/oder Deckel des Vollmilchtanks mit der Reinigungsflüssigkeit besprüht werden, um eine gründliche und dennoch mit geringem Wasser- und Reinigungsmittelverbrauch einhergehende Reinigung zu ermöglichen. Es versteht sich, dass gegebenenfalls mehrere solcher Sprühdüsen mit der Reinigungsleitung verbunden sein können.

In einer Ausgestaltung ist eine erste Zirkulationsleitung vorhanden, die von der Entnahmeleitung zum Vollmilchtank führt und in der eine Zirkulationspumpe angeordnet ist, sodass Reinigungsflüssigkeit in den Vollmilchtank zurückgeführt werden kann. Die Zirkulationspumpe kann ebenfalls mit der Steuerung verbunden sein und von dieser gesteuert werden. Dann kann bei dem geschilderten Reinigungsvorgang ein wiederholtes Durchspülen des Vollmilchtanks und der Entnahmeleitung ausgeführt werden. Ebenfalls möglich ist, dass eine zweite Zirkulationsleitung vorhanden ist, über die Reinigungsflüssigkeit von dem Tränkerationsbehälter in die Vollmilchzuführleitung zurückgeführt werden kann. In der zweiten Zirkulationsleitung kann ein Ventil und/oder eine zweite Zirkulationspumpe angeordnet sein, wobei Ventil und/oder zweite Zirkulationspumpe ebenfalls mit der Steuerung verbunden sein und von dieser gesteuert werden können. Der Reinigungsvorgang kann dann automatisch so ausgeführt werden, dass auch die Zubereitungseinheit wahlweise mehrfach durchspült wird.

In einer Ausgestaltung weist das Vollmilchdepot eine Heiz- und/oder Kühleinrichtung, eine thermische Isolation und/oder ein Rührwerk auf. Beispielsweise kann der Vollmilchtank eine Wandung mit einer thermischen Isolationsschicht aufweisen. Die Heiz- und/oder Kühleinrichtung kann eine elektrische Heizung in einer Wandung des Vollmilchtanks oder in einem Aufnahmeraum des Vollmilchtanks aufweisen und/oder eine Heiz- und/oder Kühlschlange, durch die eine heiße oder kalte Flüssigkeit geleitet werden kann. Auch diese Heiz- und/oder Kühlschlange kann in einer Wandung des Vollmilchtanks oder in einem Aufnahmeraum davon angeordnet sein. Durch die genannten Maßnahmen ist eine Aufbewahrung der Vollmilch in dem Vollmilchdepot unter optimalen Bedingungen möglich. Insbesondere gelingt es, durch ausreichende Kühlung die Keimzahl der Vollmilch gering zu halten. Dem Vollmilchtank kann ein Temperatursensor zugeordnet sein, der eine Temperatur der in dem Vollmilchtank befindlichen Vollmilch erfasst und der mit der Steuerung verbunden ist. Die Heiz- und/Kühleinrichtung und/oder das Rührwerk können mit der Steuerung verbunden sein und von der Steuerung gesteuert werden. Dadurch kann die Steuerung einerseits die gewünschten Aufbewahrungsbedingungen für die Vollmilch herstellen, indem die Vollmilch durchmischt und/oder gekühlt wird, andererseits einen Reinigungsvorgang unterstützen, indem das Rührwerk während einer Spülung des Vollmilchtanks aktiviert wird.

In einer Ausgestaltung ist die Heizeinrichtung des Vollmilchdepots dazu ausgebildet, in dem Vollmilchtank befindliche Vollmilch auf eine Pasteurisierungstemperatur zu erhitzen und für eine vorgegebene Zeit auf der Pasteurisierungstemperatur zu halten. Weiter kann die Kühleinrichtung des Vollmilchdepots dazu ausgebildet sein, die Vollmilch nach der vorgegebenen Zeit auf die zur Lagerung erforderliche Temperatur abzukühlen. Auch für die Pasteurisierung kann die Steuerung mit der Heizeinrichtung und/oder mit der Kühleinrichtung verbunden sein und diese in geeigneter Weise ansteuern. In Verbindung mit einem Temperatursensor kann die Steuerung dann auf Grundlage der erfassten Temperatur den gewünschten Temperaturverlauf durch Ansteuern der Heizeinrichtung bzw. der Kühleinrichtung steuern. Auf eine gesonderte Pasteurisierung der Vollmilch vor dem Einfüllen in den Vollmilchtank kann dann verzichtet werden, wodurch sich die Vollmilchfütterung weiter vereinfacht.

In einer Ausgestaltung weist das Vollmilchdepot zwei Vollmilchtanks auf, wobei die Entnahmeleitung zwei Entnahmeleitungsabschnitte aufweist, die jeweils ein Ablassventil aufweisen und mit einem der beiden Vollmilchtanks verbunden sind. Einbezogen sind Drei-Wege-Ventile, die wahlweise einen der beiden Entnahmeleitungsabschnitte mit einem weiterführenden Abschnitt der Entnahmeleitung verbinden. Sämtliche vorstehend zu dem Vollmilchtank beschriebenen Merkmale können bei jedem der beiden Vollmilchtanks verwirklicht werden; beispielsweise kann jeder der beiden Vollmilchtanks ein Rührwerk, eine Heiz- und/oder Kühleinrichtung, eine thermische Isolation und/oder einen verschließbaren Deckel aufweisen, usw. Durch die Verwendung zweier Vollmilchtanks kann das Vollmilchdepot kontinuierlich Vollmilch zur Verfügung stellen. Insbesondere kann nach einem Reinigungsvorgang, der einen der beiden Vollmilchtanks einbezieht, sofort Vollmilch aus dem anderen Vollmilchtank bereitgestellt werden, noch bevor der gerade gereinigte Vollmilchtank erneut befüllt wurde. Dadurch wird die Verfügbarkeit des Systems weiter erhöht und ein Benutzer gewinnt erhebliche Flexibilität hinsichtlich des Befüllzeitpunkts. Weiterhin wird während einer automatischen Reinigung mindestens einer der beiden Vollmilchtanks sowie der diesem Vollmilchtank zugeordnete Entnahmeleitungsabschnitt sowie die Verbindungsleitung gereinigt. Eine zusätzliche manuelle Reinigung ist daher auch bei Verwendung zweier Vollmilchtanks nicht erforderlich. Die beiden Entnahmeleitungsabschnitte weisen jeweils ein Ablassventil auf, über das die Zufuhr von Vollmilch aus dem jeweiligen Vollmilchtank bzw. von darin befindlicher Reinigungsflüssigkeit über die Verbindungsleitung zur Zubereitungseinheit gesteuert werden kann. Die beiden Ablassventile können ebenfalls mit der Steuerung verbunden sein und von dieser gesteuert werden. Die beiden Entnahmeleitungsabschnitte können in einem Verzweigungspunkt zusammengeführt sein und dort unmittelbar in die Verbindungsleitung oder in einen gemeinsamen (dritten) Entnahmeleitungsabschnitt münden. Wahlweise kann jedem der beiden Entnahmeleitungsabschnitte ein Füllstandsensor und/oder ein Leermelder zugeordnet sein, wie vorstehend zu der Entnahmeleitung beschrieben. Die obigen Ausführungen zur Reinigungsmittel- und Wasserzufuhr in den Vollmilchtank gelten entsprechend für jeden der beiden Vollmilchtanks.

In einer Ausgestaltung ist die Steuerung dazu ausgebildet, nach Maßgabe eines Zeitplans automatisch einen Reinigungsvorgang durchzuführen und unter Berücksichtigung eines prognostizierten Bedarfs eine Befüllmenge für einen zu einem ersten Reinigungszeitpunkt leeren Vollmilchtank so vorzugeben, dass sie bis zu einem auf den ersten Reinigungszeitpunkt folgenden, zweiten Reinigungszeitpunkt ausreicht. Nach Maßgabe eines Zeitplans bedeutet insbesondere zu vorgegebenen Zeitpunkten, beispielsweise um 6:00 Uhr und um 18:00 Uhr, oder in vorgegebenen Zeitabständen, beispielsweise alle 12 Stunden. Der prognostizierte Bedarf kann zum Beispiel manuell eingegeben oder der Steuerung in sonstiger Weise vorgegeben werden. Insbesondere kann der prognostizierte Bedarf von der Steuerung ermittelt werden, zum Beispiel auf Grundlage der von der Zubereitungseinheit in einem vorherigen Zeitraum zubereiteten Tränkemenge. Hierzu kann insbesondere die Tränkemenge in einem dem Prognosezeitraum entsprechenden Zeitraum des Vortags/der Vortage herangezogen werden. Durch das Vorgeben einer Befüllmenge für einen zukünftigen Zeitraum unter Berücksichtigung einer solchen Bedarfsprognose kann sichergestellt werden, dass der Vorrat an Vollmilch, der nachfolgend von einer Bedienperson entsprechend der Befüllmenge in einen vormals leeren Vollmilchtank eingefüllt wird, den Bedarf in dem zukünftigen Zeitraum deckt. Zusätzlich zu dem prognostizierten Bedarf kann bei der Vorgabe der Befüllmenge ein Füllstand in dem jeweils anderen Vollmilchtank berücksichtigt werden. Insgesamt wird erreicht, dass nach dem Einfüllen einer vorgegebenen Befüllmenge eine unterbrechungsfreie Versorgung der Nutztiere bis zum nächsten Reinigungsvorgang möglich ist.

In einer Ausgestaltung geht die Reinigungsleitung an einem Verzweigungspunkt in zwei Reinigungsleitungsabschnitte über, die jeweils ein Absperrventil aufweisen und zu einem der Vollmilchtanks führen. Die beiden Absperrventile sind jeweils mit der Steuerung verbunden und werden von dieser angesteuert, sodass bei einem Reinigungsvorgang von der Steuerung gesteuert werden kann, in welchen der beiden Vollmilchtanks das Reinigungsmittel eingegeben wird. Einbezogen ist auch hier ein Drei-Wege-Ventil.

In einer Ausgestaltung ist in der Vollmilchzuführleitung eine Vollmilchpumpe angeordnet und/oder eine Heizeinrichtung, mit der eine durch die Vollmilchzuführleitung zugeführte Flüssigkeit vor dem Befüllen des Tränkerationsbehälters temperiert werden kann. Die Heizeinrichtung kann insbesondere ein Boiler sein. Durch diese Lösung wird die Vollmilch erst unmittelbar vor dem Bereitstellen im Tränkerationsbehälter auf die gewünschte Trinktemperatur gebracht. Ein weiterer Vorteil ist, dass Vollmilchpumpe und Heizeinrichtung von dem automatischen Reinigungsvorgang erfasst werden.

In einer Ausgestaltung weist die Steuerung eine Benachrichtigungseinheit auf, die dazu ausgebildet ist, mithilfe einer Anzeige und/oder durch Versenden einer elektronischen Nachricht einen Benutzer über einen Zustand des Systems zu informieren. Der Zustand kann beispielsweise eine oder mehrere der folgenden Informationen umfassen: einen Füllstand in einem Vollmilchtank, einen Füllstand in einem Reinigungsmittelbehälter, eine Temperatur oder einen Temperaturverlauf in einem Vollmilchtank, eine Abweichung eines Messwerts von einem Sollwert, dass und/oder wann ein Reinigungsvorgang ausgeführt wird, dass und/oder wann eine Pasteurisierung durchgeführt wird, oder eine von der Steuerung ermittelte Befüllmenge. Diese Informationen können entweder mit einer Anzeige an dem System dargestellt oder als elektronische Nachricht an den Benutzer versendet werden, insbesondere per E-Mail, SMS oder über ein soziales Netzwerk. Durch diese Informationen wird für den Benutzer die Fütterung weiter vereinfacht.

In einer Ausgestaltung weist die Steuerung eine Dokumentationseinheit auf, die dazu ausgebildet ist, einen Reinigungsvorgang zu dokumentieren. Alternativ oder zusätzlich kann die Dokumentationseinheit dazu ausgebildet sein, einen Pasteurisierungsvorgang zu dokumentieren. Mit Hilfe der Dokumentationseinheit kann jederzeit verifiziert werden, dass das System ordnungsgemäß gereinigt bzw. dass die verfütterte Vollmilch ordnungsgemäß pasteurisiert wurde. Hierzu können die jeweils relevanten Informationen von der Steuerung gespeichert und/oder für eine spätere Auswertung zur Verfügung gestellt werden.

Nachfolgend wird die Erfindung anhand eines Ausführungsbeispiels näher erläutert. Es zeigen:
- Fig. 1: ein System zur Fütterung von Nutztieren mit einer vollmilchhaltigen Tränke in einer schematischen Darstellung, und
- Fig. 2: ein Diagramm zum zeitlichen Verlauf der Füllstände in den beiden Vollmilchtanks des Systems aus Fig. 1

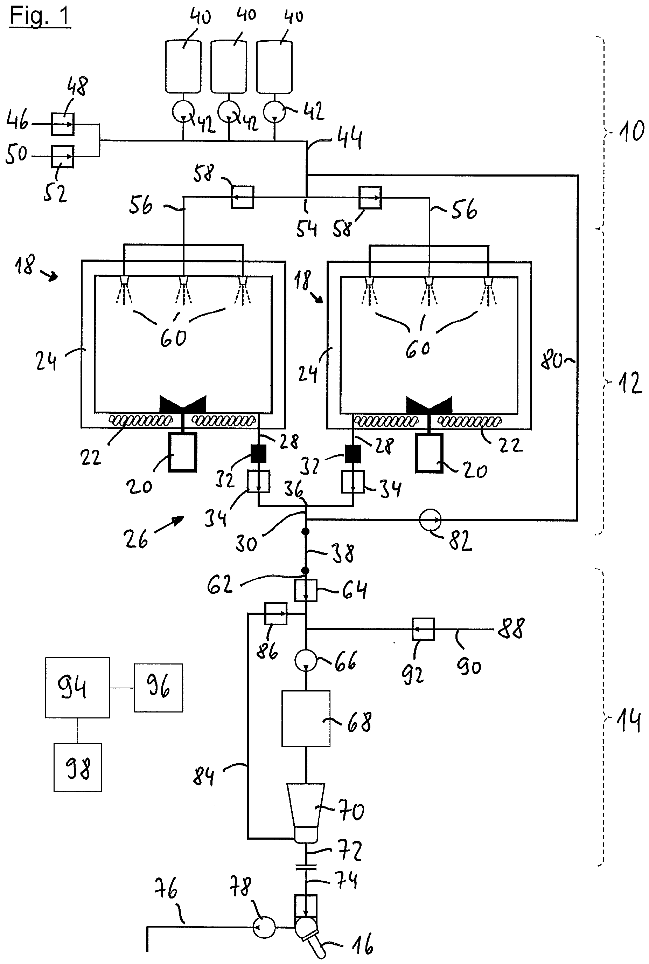

Das System zur Fütterung von Nutztieren mit einer vollmilchhaltigen Tränke aus Figur 1 hat eine Reinigungseinheit 10, ein Vollmilchdepot 12, eine Zubereitungseinheit 14 und einen Saugnuckel 16. Das Vollmilchdepot 12 umfasst zwei Vollmilchtanks 18, die jeweils ein Fassungsvermögen von mindestens 150 1 aufweisen. Jeder der beiden Vollmilchtanks 18 weist ein Rührwerk 20, eine Heiz-/Kühlschlange 22 und eine Wärmeisolation 24 auf.

Eine Entnahmeleitung 26 des Vollmilchdepots 12 umfasst zwei Entnahmeleitungsabschnitte 28, die jeweils mit einem der beiden Vollmilchtanks 18 verbunden sind und in denen jeweils ein Füllstandsensor 32 und ein Ablassventil 34 angeordnet sind. Die von dem jeweiligen Vollmilchtank 18 entfernten Enden der Entnahmeleitungsabschnitte 28 münden an einem Verzweigungspunkt 36 in einen gemeinsamen Entnahmeleitungsabschnitt 30. An dem von dem Verzweigungspunkt 36 entfernten Ende des gemeinsamen Entnahmeleitungsabschnitts 30 ist die Entnahmeleitung 26 mit einer Verbindungsleitung 38 verbunden oder geht in diese über.

In der Figur 1 oberhalb des Vollmilchdepots 12 befindet sich eine Reinigungseinheit 10, die in ein (nicht gezeigtes) Gehäuse des Vollmilchdepots 12 integriert sein kann. Die Reinigungseinheit 10 weist drei Reinigungsmittelbehälter 40 auf, die jeweils ein Reinigungsmittel enthalten. Jedem Reinigungsmittelbehälter 40 ist eine Pumpe 42 zugeordnet, mit der Reinigungsmittel aus dem betreffenden Reinigungsmittelbehälter 40 in eine Reinigungsleitung 44 dosiert werden kann.

Das in der Figur 1 links dargestellte Ende der Reinigungsleitung 44 ist über ein Absperrventil 48 mit einem Kaltwasseranschluss 46 verbunden und über ein Absperrventil 52 mit einer Warmwasserleitung 50. Das andere Ende der Reinigungsleitung 44 führt zu einem Verzweigungspunkt 54, an dem sich die Reinigungsleitung 44 in zwei Reinigungsleitungsabschnitte 56 verzweigt. In jedem dieser Reinigungsleitungsabschnitte 56 ist ein Absperrventil 58 angeordnet. Die freien Enden der Reinigungsabschnitte 56 sind jeweils mit mehreren Sprühdüsen 60 verbunden, die in einem der Vollmilchtanks 18 angeordnet sind. Auf diese Weise kann beispielsweise durch Öffnen des Absperrventils 52 und des Absperrventils 58 bei geschlossenen Absperrventilen 48, 56 Warmwasser in den in der Figur 1 links dargestellten Vollmilchtank 18 eingesprüht werden, gegebenenfalls unter Hinzufügung von Reinigungsmittel aus einem der Reinigungsmittelbehälter 40 durch entsprechendes Ansteuern der zugeordneten Pumpe 42. Anschließend befindet sich die Reinigungsflüssigkeit zunächst in dem betreffenden Vollmilchtank 18.

Mit dem von der Entnahmeleitung 26 entfernten Ende der Verbindungsleitung 38 ist eine Vollmilchzuführleitung 62, in der ein Einlassventil 64 angeordnet ist, verbunden. Weiterhin umfasst die Zubereitungseinheit 14 eine Vollmilchpumpe 66, die mit der Vollmilchzuführleitung 62 verbunden ist und die in der Vollmilchzuführleitung 62 befindliche Flüssigkeit durch eine Heizeinrichtung 68 hindurch in einen Tränkerationsbehälter 70 fördern kann.

An dem Tränkerationsbehälter 70 beginnt eine Abgabeleitung 72 der Zubereitungseinheit 14, die in eine Saugleitung 74 mündet, welche mit dem Saugnuckel 16 verbunden ist. An einem nicht dargestellten Abzweigpunkt in der Saugleitung 74 kurz vor dem Saugnuckel 16 zweigt eine Abzweigleitung 76 ab, in der eine Pumpe 78 angeordnet ist.

Weiterhin zeigt Figur 1 eine erste Zirkulationsleitung 80, in der eine erste Zirkulationspumpe 82 angeordnet ist. Die erste Zirkulationsleitung 80 beginnt an dem gemeinsamen Entnahmeleitungsabschnitt 30 und führt in die Reinigungsleitung 44, kurz vor dem Verzweigungspunkt 54. Ebenfalls dargestellt ist eine zweite Zirkulationsleitung 84, in der ein Absperrventil 86 angeordnet ist und die von dem Tränkerationsbehälter 70 in die Vollmilchzuführleitung 62 zurückführt. Ein Kaltwasseranschluss 88 ist über eine Leitung 90, in der ein Absperrventil 92 angeordnet ist, mit der Vollmilchzuführleitung 62 verbunden ist. Über diese Leitung 90 kann Kaltwasser für das Anmischen einer Tränkeration zugeführt werden.

Schließlich weist das System aus Figur 1 eine Steuerung 94 auf, die über nicht dargestellte Verbindungen mit jedem der genannten Ventile und jeder der genannten Pumpen verbunden ist. Außerdem ist die Steuerung 94 mit den beiden Rührwerken 20, mit der Heizeinrichtung 68 sowie mit den Füllstandsensoren 32 verbunden.

Die Steuerung 94 ist dazu ausgebildet, einen automatischen Reinigungsvorgang auszuführen. Hierzu wird in einem ersten Schritt der in die jeweilige Reinigung einzubeziehende Vollmilchtank 18 wie oben beschrieben mit Reinigungsflüssigkeit gefüllt. Dafür steuert die Steuerung 94 eines oder beide Absperrventile 48, 52 an den Wasseranschlüssen 46, 50 und mindestens eine der Pumpen 42 an. Anschließend wird das diesem Vollmilchtank 18 zugeordnete Ablassventil 34 sowie das Einlassventil 64 von der Steuerung 94 geöffnet und die Vollmilchpumpe 66 von der Steuerung 94 angesteuert, sodass die Reinigungsflüssigkeit aus dem betreffenden Vollmilchtank 18 durch die Entnahmeleitung 26, die Verbindungsleitung 38 und die Vollmilchzuführleitung 62 in den Tränkerationsbehälter 70 geleitet wird. Durch Ansteuern der Pumpe 78 durch die Steuerung 94 wird sodann die Reinigungsflüssigkeit aus dem Tränkerationsbehälter 70 durch die Abgabeleitung 72, durch die Saugleitung 94 bis zum Abzweigpunkt vor dem Saugnuckel 16 und von dort weiter durch die Abzweigleitung 76 geleitet, um auch diese Elemente in die Reinigung einzubeziehen.

Nur schematisch dargestellt sind eine Benachrichtigungseinheit 96 und eine Dokumentationseinheit 98, die die vorstehend beschriebenen Funktionen erfüllen. Sie können in die Steuerung 94 integriert oder, wie in Fig. 1 angedeutet, damit verbunden sein.

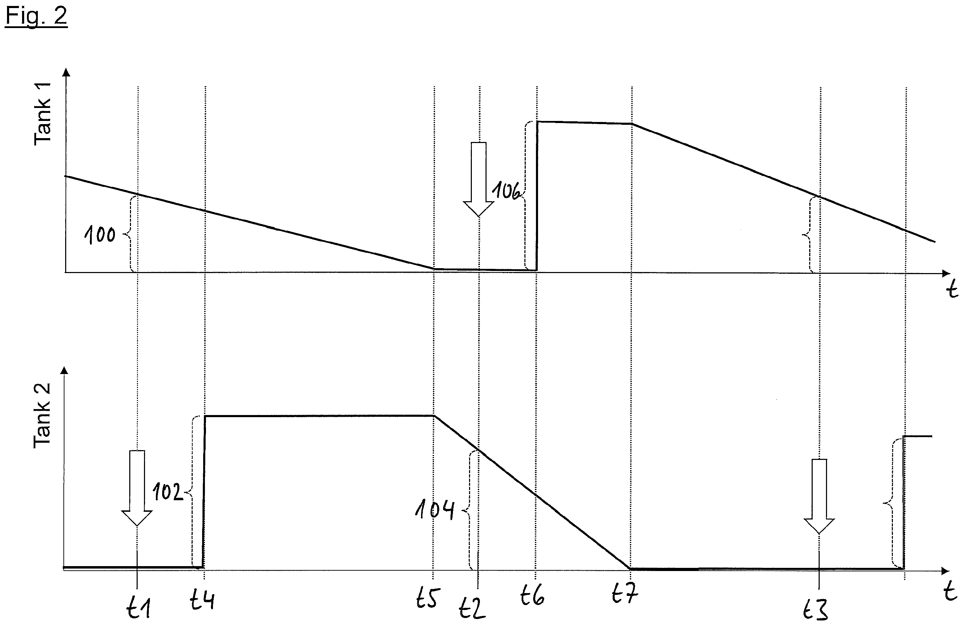

Nachfolgend wird anhand der Figur 2 der zeitliche Ablauf der Verwendung des Systems aus Figur 1 beispielhaft erläutert. Diese Erläuterungen gelten nicht nur für das System aus Figur 1, sondern sind von dessen konstruktiven Einzelheiten unabhängig. Sie gelten gleichermaßen für andere erfindungsgemäße Systeme mit zwei Vollmilchtanks 18. Das obere Diagramm der Figur 1 zeigt den Füllstand des linken Vollmilchtanks 18 aus der Figur 1, nachfolgend auch als Tank 1 bezeichnet, das untere Diagramm den zeitlichen Verlauf des Füllstands des in der Figur 1 rechts dargestellten Vollmilchtanks 18, nachfolgend auch als Tank 2 bezeichnet.

Die Zeitachse verläuft horizontal und umfasst drei Zeitpunkte t1, t2 und t3, zu denen jeweils ein automatischer Reinigungsvorgang, der einen der beiden Vollmilchtanks 18 einbezieht, ausgeführt wird. Diese Reinigungsvorgänge werden durch die drei Pfeile veranschaulicht. Wie das Diagramm zeigt, ist zum Zeitpunkt t1 Tank 2 leer und im Tank 1 befindet sich eine Restmenge 100, die im Beispiel 1001 betragen soll.

Die Steuerung 94 hat anhand des Verbrauchs des korrespondierenden Vortageszeitraums ermittelt, dass bis zum Reinigungszeitpunkt t2 voraussichtlich ein Bedarf von 2501 besteht. Diesen prognostizierten Bedarf sowie die Restmenge 100 und einen Sicherheitszuschlag von 501 berücksichtigend, gibt die Steuerung 94 zum Zeitpunkt t1 eine Befüllmenge 102 für Tank 2 von 2501 - 1001 + 501 = 2001 vor. Zum Zeitpunkt t4, einige Stunden nach dem Zeitpunkt t1, wird diese Befüllmenge 102 von einer Bedienperson in den Tank 2 eingefüllt. Währenddessen erfolgt die Bereitstellung der Vollmilch für die Zubereitungseinheit 14 weiterhin aus dem Tank 1, wie der dargestellte, langsam abnehmende Füllstand darin verdeutlicht. Zum Zeitpunkt t5 ist Tank 1 leer und durch Schließen eines der Ablassventile 34 und Öffnen des anderen Ablassventils 34 wird die Versorgung der Zubereitungseinheit 14 praktisch unterbrechungsfrei auf Tank 2 umgestellt.

Zum Zeitpunkt t2 erfolgt dann gemäß dem vorgegebenen Zeitplan die automatische Reinigung, in die diesmal Tank 1 einbezogen wird. Zur selben Zeit wird festgestellt, dass im Tank 2 eine Restmenge 104 von 1501 vorhanden ist. Anhand eines prognostizierten Bedarfs von 2801 bis zum Zeitpunkt t3 der nächsten planmäßigen Reinigung und eines Sicherheitszuschlags von 501 ermittelt die Steuerung 94 eine Befüllmenge 106 für Tank 1 von 2801 - 1501 + 501 = 1801. Ein Benutzer füllt diese Befüllmenge zum Zeitpunkt t6 in Tank 1 ein. Etwas später, zum Zeitpunkt t7, ist Tank 2 leer und die Versorgung der Zubereitungseinheit 14 wird auf Tank 1 umgestellt. Die geschilderten Vorgänge wiederholen sich zum Zeitpunkt t3 der nächsten Reinigung. Es versteht sich, dass die Berechnung der Befüllmengen nicht notwendigerweise zum Zeitpunkt einer Reinigung ausgeführt werden müssen.

### Liste der Bezugszeichen:

- 10: Reinigungseinheit
- 12: Vollmilchdepot
- 14: Zubereitungseinheit
- 16: Saugnuckel
- 18: Vollmilchtank
- 20: Rührwerk
- 22: Heiz-/Kühlschlange
- 24: Wärmeisolation
- 26: Entnahmeleitung
- 28: Entnahmeleitungsabschnitt
- 30: gemeinsamer Entnahmeleitungsabschnitt
- 32: Füllstandssensor
- 34: Ablassventil
- 36: Verzweigungspunkt
- 38: Verbindungsleitung
- 40: Reinigungsmittelbehälter
- 42: Pumpe
- 44: Reinigungsleitung
- 46: Kaltwasseranschluss
- 48: Absperrventil
- 50: Warmwasseranschluss
- 52: Absperrventil
- 54: Verzweigungspunkt
- 56: Reinigungsleitungsabschnitt
- 58: Absperrventil
- 60: Sprühdüse
- 62: Vollmilchzuführleitung
- 64: Einlassventil
- 66: Vollmilchpumpe
- 68: Heizeinrichtung
- 70: Tränkerationsbehälter
- 72: Abgabeleitung
- 74: Saugleitung
- 76: Abzweigleitung
- 78: Pumpe
- 80: erste Zirkulationsleitung
- 82: Pumpe
- 84: zweite Zirkulationsleitung
- 86: Absperrventil
- 88: Kaltwasseranschluss
- 90: Leitung
- 92: Absperrventil
- 94: Steuerung
- 96: Benachrichtigungseinheit
- 98: Dokumentationseinheit
- 100: Restmenge
- 102: Befüllmenge
- 104: Restmenge
- 106: Befüllmenge

## Patentansprüche

1. System zur Fütterung von Nutztieren mit einer vollmilchhaltigen Tränke, wobei das System folgendes aufweist:
• ein Vollmilchdepot (12), das einen Vollmilchtank (18) zur Aufnahme eines Vollmilchvorrats und eine Entnahmeleitung (26) aufweist,
• eine Zubereitungseinheit (14) zur Zubereitung einer Tränkeration, die eine Vollmilchzuführleitung (62), einen Tränkerationsbehälter (70) und eine Abgabeleitung (72) aufweist,
• eine Verbindungsleitung (38), die die Entnahmeleitung (26) mit der Vollmilchzuführleitung (62) verbindet,
• einen Saugnuckel (16), der mit der Abgabeleitung (72) verbunden ist,
• eine Reinigungseinheit (10), die einen Reinigungsmittelbehälter (40) zur Aufnahme eines Reinigungsmittels und eine Reinigungsmittelzuführeinrichtung, mit der dem Vollmilchtank (18) Reinigungsmittel aus dem Reinigungsmittelbehälter (40) zugeführt werden kann, und
• eine Steuerung (94), die dazu ausgebildet ist, die Reinigungseinheit (10) und die Zubereitungseinheit (14) zur Ausführung eines Reinigungsvorgangs derart anzusteuern, dass eine Reinigungsflüssigkeit aus dem Vollmilchtank (18) durch die Verbindungsleitung (38) in die Zubereitungseinheit (14) geleitet wird.

2. System nach Anspruch 1, **dadurch gekennzeichnet, dass** der Saugnuckel (16) über eine Saugleitung (74) mit der Abgabeleitung (72) verbunden ist, wobei von der Saugleitung (74) an einem Abzweigpunkt eine Abzweigleitung (76) abzweigt, in der eine Pumpe (78) angeordnet ist, wobei die Steuerung (94) dazu ausgebildet ist, die Zubereitungseinheit (14) und die Pumpe (78) so anzusteuern, dass die Reinigungsflüssigkeit bei dem Reinigungsvorgang von der Vollmilchzuführleitung (62) durch den Tränkerationsbehälter (70), durch die Abgabeleitung (72), durch die Saugleitung (74) bis zum Abzweigpunkt und dann durch die Abzweigleitung (76) geleitet wird.

3. System nach Anspruch 1 oder 2, **dadurch gekennzeichnet, dass** in der Entnahmeleitung (26) ein Füllstandssensor (32) und/oder ein Leermelder angeordnet ist.

4. System nach einem der Ansprüche 1 bis 3, **dadurch gekennzeichnet, dass** die Reinigungseinheit (10) einen Wasseranschluss (46, 50) und eine Reinigungsleitung (44) aufweist, die von dem Wasseranschluss (46, 50) bis zu dem Vollmilchtank (18) führt, wobei die Reinigungsmittelzuführeinrichtung eine Pumpe (42) aufweist, mit der Reinigungsmittel aus dem Reinigungsmittelbehälter (40) in den Vollmilchtank (18) und/oder in die Reinigungsleitung (44) gepumpt werden kann.

5. System nach Anspruch 4, **dadurch gekennzeichnet, dass** die Reinigungsleitung (44) mit einer Sprühdüse (60) verbunden ist, die in dem Vollmilchtank (18) angeordnet ist.

6. System nach einem der Ansprüche 1 bis 5, **dadurch gekennzeichnet, dass** eine erste Zirkulationsleitung (80) vorhanden ist, die von der Entnahmeleitung (26) zum Vollmilchtank (18) führt und in der eine Zirkulationspumpe (82) angeordnet ist, so dass Reinigungsflüssigkeit in den Vollmilchtank (18) zurückgeführt werden kann.

7. System nach einem der Ansprüche 1 bis 6, **dadurch gekennzeichnet, dass** das Vollmilchdepot (12) eine Heiz- und/oder Kühleinrichtung, eine thermische Isolation (24) und/oder ein Rührwerk (20) aufweist.

8. System nach Anspruch 7, **dadurch gekennzeichnet, dass** die Heizeinrichtung des Vollmilchdepots (12) dazu ausgebildet ist, in dem Vollmilchtank (18) befindliche Vollmilch auf eine Pasteurisierungstemperatur zu erhitzen und für eine vorgegebene Zeit auf der Pasteurisierungstemperatur zu halten.

9. System nach einem der Ansprüche 1 bis 8, **dadurch gekennzeichnet, dass** das Vollmilchdepot (12) zwei Vollmilchtanks (18) aufweist, wobei die Entnahmeleitung (26) zwei Entnahmeleitungsabschnitte (28) aufweist, die jeweils ein Ablassventil (34) aufweisen und mit einem der beiden Vollmilchtanks (18) verbunden sind.

10. System nach Anspruch 9, **dadurch gekennzeichnet, dass** die Steuerung (94) dazu ausgebildet ist, nach Maßgabe eines Zeitplans automatisch einen Reinigungsvorgang durchzuführen und unter Berücksichtigung eines prognostizierten Bedarfs eine Befüllmenge (102, 106) für einen zu einem ersten Reinigungszeitpunkt leeren Vollmilchtank (18) so vorzugeben, dass sie bis zu einem auf den ersten Reinigungszeitpunkt folgenden, zweiten Reinigungszeitpunkt ausreicht.

11. System nach Anspruch 9 oder 10, **dadurch gekennzeichnet, dass** die Reinigungsleitung (44) an einem Verzweigungspunkt (54) in zwei Reinigungsleitungsabschnitte (56) übergeht, die jeweils ein Absperrventil (58) aufweisen und zu einem der Vollmilchtanks (18) führen.

12. System nach einem der Ansprüche 1 bis 11, **dadurch gekennzeichnet, dass** in der Vollmilchzuführleitung (62) eine Vollmilchpumpe (66) angeordnet ist und/oder eine Heizeinrichtung (68), mit der eine durch die Vollmilchzuführleitung (62) zugeführte Flüssigkeit vor dem Befüllen des Tränkerationsbehälters (70) temperiert werden kann.

13. System nach einem der Ansprüche 1 bis 12, **dadurch gekennzeichnet, dass** die Steuerung (94) eine Benachrichtigungseinheit (96) aufweist, die dazu ausgebildet ist, mithilfe einer Anzeige und/oder durch Versenden einer elektronischen Nachricht einen Benutzer über einen Zustand des Systems zu informieren.

14. System nach einem der Ansprüche 1 bis 13, **dadurch gekennzeichnet, dass** die Steuerung (94) eine Dokumentationseinheit (98) aufweist, die dazu ausgebildet ist, einen Reinigungsvorgang zu dokumentieren.
